# FASCICULE DE BREVET EUROPEEN

(11) **EP 1 586 858 B1**
(45) Date de publication et mention de la délivrance du brevet: **14.05.2008**
(21) Numéro de dépôt: 05290699.7
(22) Date de dépôt: 30.03.2005
(51) Int. Cl.: G01C 19/68

(54) **Procédé de commande en push-pull d'un gyrometre à laser**
Verfahren zum Gegentaktantrieb eines Laserkreisels
Method for push-pull drive of a laser gyrometer

(30) Priorité: 14.04.2004 FR 0403909
(43) Date de publication de la demande: 19.10.2005
(73) Titulaire: Sagem Défense Sécurité, 75015 Paris (FR)
(72) Inventeur: Lignon, Christian, 95100 Argenteuil (FR)
(74) Mandataire: Fruchard, Guy

(56) Documents cités:
- FR-A- 2 360 885
- FR-A- 2 516 233

## Description

La présente invention concerne un procédé de commande en push-pull d'un gyromètre à laser.

### ARRIERE PLAN DE L'INVENTION

On connaît, notamment du document FR 2 360 885/US 4 152 071, un gyromètre à laser comportant trois miroirs disposés pour réaliser un trajet optique en boucle fermée pour deux faisceaux laser se propageant selon des sens opposés et modulés à des fréquences identiques. On sait que lorsque le gyromètre est au repos, les deux faisceaux parcourent des trajets de même longueur et restent donc à des fréquences identiques tandis que lorsque le gyromètre est entraîné en rotation, les deux faisceaux parcourent des trajets inégaux et oscillent alors à des fréquences différentes, la différence de fréquence étant représentative de la vitesse angulaire du gyromètre. Cette différence de fréquence est mesurée grâce à un interféromètre permettant de mesurer la phase optique entre les deux faisceaux.

Le fonctionnement d'un gyromètre à laser est satisfaisant pour des vitesses de rotation supérieures à une valeur critique qui dépend de la qualité de réalisation du gyromètre et en particulier de la qualité de réalisation des miroirs utilisés dans le gyromètre. Typiquement, la valeur critique de la vitesse de rotation du gyromètre est de l'ordre de cent degrés par heure. Pour des vitesses de rotation comprises dans une zone dénommée zone aveugle pour laquelle la valeur de la vitesse de rotation est inférieure à la valeur critique, il a été constaté l'existence d'un couplage entre les faisceaux de sorte que la vitesse réelle du gyromètre ne peut plus être mesurée par une différence entre les fréquences d'oscillation des faisceaux laser.

Afin de permettre une mesure de la vitesse de rotation dans la zone aveugle, il est connu du document précité de superposer au mouvement de rotation réel du gyromètre un mouvement d'entraînement alterné sinusoïdal bruité, dénommé mouvement de tremblement, à une vitesse sensiblement supérieure à la valeur critique de la vitesse de rotation réelle du gyromètre. La zone aveugle du gyromètre est alors remplacée par une série de traversées de la zone aveugle lors de chaque inversion du mouvement de tremblement et la performance du gyromètre est alors limitée par un mouvement de cheminement aléatoire qui est l'intégrale des erreurs de mesure gyroscopique effectuées à chaque traversée de la zone aveugle. Ces erreurs sont dues pour une grande part aux échanges d'énergie entre les deux faisceaux laser qui se traduisent par une variation, en fonction de la phase optique, des deux intensités lasées. Cette variation est appelée clignement. Pour obtenir des performances élevées du gyromètre, il est donc nécessaire de réduire le clignement.

Pour réduire le clignement, il est connu du document précité d'actionner deux des miroirs du gyromètre selon une commande, dénommée commande push-pull, faisant varier la distance entre les miroirs tout en maintenant constante la longueur totale du trajet optique des faisceaux laser. La commande push-pull permet de faire varier les phases entre les différentes rétro-diffusions afin de minimiser la rétro-diffusion globale. Cette rétro-diffusion peut être mesurée grâce à ses conséquences sur l'intensité lasée de l'un des faisceaux laser en observant le clignement du signal d'intensité lasée.

Afin que la commande push-pull soit la plus appropriée, il est préférable que l'amplitude des oscillations de l'intensité lasée soit mesurée dans la zone aveugle car les échanges d'énergie y induisent le plus d'erreur gyrométrique. A cet effet, le document précité part de l'hypothèse que l'amplitude de l'intensité lasée augmente lors du passage dans la zone aveugle, et propose donc de mesurer l'amplitude maximale du signal d'intensité lasée.

Toutefois il s'est avéré que cette hypothèse de départ n'est pas toujours vérifiée, l'amplitude de l'intensité lasée en dehors de la zone aveugle pouvant dans certaines conditions être supérieure à l'amplitude de l'intensité lasée dans la zone aveugle. Le procédé du document cité provoque donc des erreurs de mesure du clignement et par voie de conséquence, des erreurs de la commande push-pull.

### OBJET DE L'INVENTION

Un but de la présente invention est de proposer un procédé de commande en push-pull d'un gyromètre à laser en améliorant la mesure de l'amplitude du signal de clignement pour que cette mesure intervienne de façon précise dans la zone aveugle du gyromètre.

### RESUME DE L'INVENTION

En vue de la réalisation de ce but, on propose, selon l'invention, un procédé de commande en push-pull d'un gyromètre à laser comportant au moins trois miroirs disposés pour réaliser un trajet optique en boucle fermée pour deux faisceaux laser se propageant selon des sens opposés, le gyromètre étant en outre soumis à un mouvement de tremblement, au moins deux miroirs étant associés à des actionneurs reliés à des organes de commande en push-pull pour commander une position des miroirs en fonction d'une amplitude d'un signal de clignement compris dans un signal d'intensité lasée des faisceaux laser, ce procédé comportant les étapes de détecter une fréquence du signal de clignement d'au moins un faisceau laser, et de déclencher une mesure de l'amplitude du signal de clignement lorsque la fréquence du signal de clignement est inférieure à un seuil prédéterminé correspondant à une zone aveugle du gyromètre.

Selon une constatation faisant partie de l'invention, il a en effet été remarqué que, contrairement à l'amplitude du signal de clignement qui n'est pas toujours maximale dans une zone aveugle, la fréquence du signal de clignement dans la zone aveugle est toujours inférieure à la fréquence du signal de clignement en dehors de la zone aveugle. Par une mesure de la fréquence du signal de clignement, il est donc possible de déterminer de façon précise les instants auxquels la mesure de l'amplitude du signal de clignement doit être effectuée pour effectuer une commande push-pull satisfaisante. Les performances du gyromètre sont donc améliorées.

Selon un mode de réalisation préféré de l'invention, le gyromètre comporte un interféromètre réalisant à partir des faisceaux laser un signal d'interférences générant deux signaux de franges en quadrature et le procédé comporte les étapes de filtrer chaque signal de franges selon un filtrage passe haut, de comparer l'amplitude du signal filtré avec un seuil prédéterminé correspondant à la zone aveugle, et de déclencher la mesure de l'amplitude du signal de clignement lorsque l'amplitude du signal filtré est inférieure au seuil prédéterminé. L'amplitude du signal filtré est en effet représentative de la fréquence du signal de clignement de sorte que l'instant précis de mesure de l'amplitude du signal de clignement est déterminée par des moyens simples et robustes.

Selon d'autres aspects de ce mode de mise en oeuvre préféré de l'invention, le procédé comporte les étapes de filtrer par un filtre passe-haut les signaux de franges, de les redresser et d'additionner les signaux filtrés selon un signal de sommation avant d'effectuer un filtrage passe-bas puis une comparaison avec le seuil prédéterminé. Les deux signaux de franges étant en quadrature, la mesure de l'amplitude des signaux filtrés est alors améliorée.

Selon encore un autre aspect avantageux de l'invention, le seuil prédéterminé est modulé en fonction de l'amplitude crête à crête d'un signal de franges. On adapte ainsi le seuil prédéterminé à la puissance instantanée des faisceaux laser de sorte que la précision de détection du seuil de déclenchement est indépendante de la puissance des faisceaux laser.

### BREVE DESCRIPTION DES DESSINS

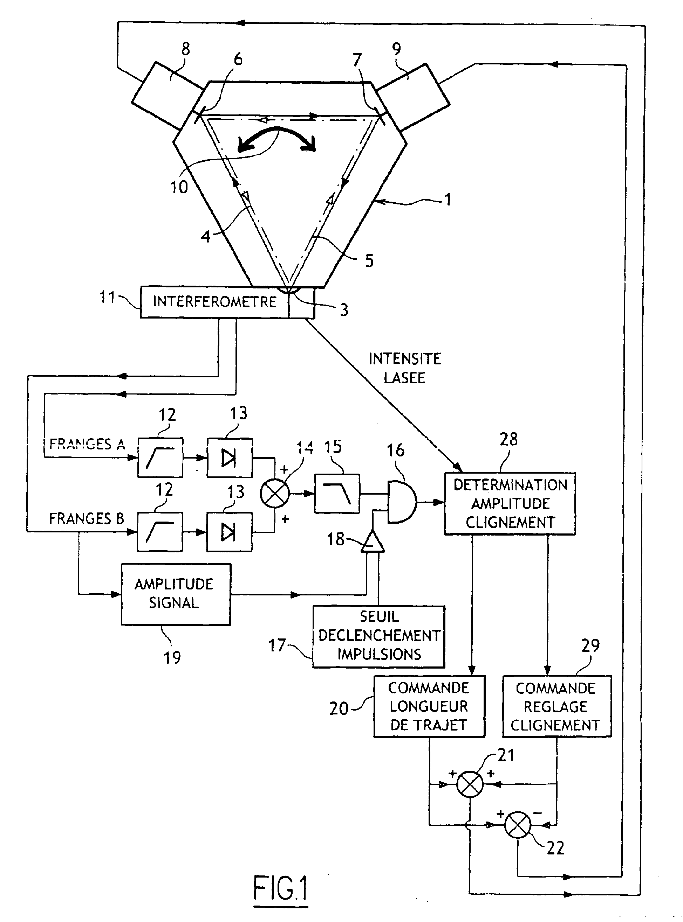

D'autres caractéristiques et avantages de l'invention apparaîtront à la lecture de la description qui suit d'un mode de mise en oeuvre particulier non limitatif de l'invention en référence à la figure unique ci-jointe qui est une représentation schématique du gyromètre à laser selon l'invention et de différentes étapes du procédé.

### DESCRIPTION DETAILLEE DE L'INVENTION

En référence à la figure, le gyromètre à laser 1 comporte de façon connue en soi un miroir semi-réfléchissant 3 pour générer un faisceau laser 4, illustré selon un trait continu, se propageant dans un sens horaire et un faisceau laser 5, illustré selon un trait mixte, se propageant dans un sens anti-horaire. Les faisceaux laser 4, 5 sont réfléchis par des miroirs 6, 7 respectivement associés à des actionneurs 8, 9 afin d'assurer un trajet triangulaire en boucle fermée. Le gyromètre 1 comporte également un organe d'entraînement destiné à soumettre le gyromètre à un mouvement de tremblement sinusoïdal, illustré par la double flèche 10, lorsque le gyromètre est soumis à une vitesse de rotation inférieure à la vitesse critique.

Egalement de façon connue en soi, le gyromètre 1 comporte un interféromètre 11 assurant un prélèvement partiel des faisceaux laser 4, 5, et générant deux signaux de franges en quadrature.

Selon le mode de mise en oeuvre particulier de l'invention illustré, chacun des signaux de franges est envoyé à un filtre passe haut 12, ayant une fréquence de coupure de l'ordre de 50 kHz, pour obtenir à partir du signal de franges un signal dont l'amplitude est représentative de la fréquence des franges. Les signaux filtrés ainsi obtenus sont chacun redressés par un organe de redressement 13 et sont additionnés dans un additionneur 14. Le signal de sommation obtenu est soumis à un filtrage passe bas 15 destiné à éliminer la composante de bruit alternative dans le signal de sommation. L'amplitude du signal obtenu est comparée dans un comparateur 16 à un seuil prédéterminé 17 représentatif de la fréquence des franges lors de l'entrée dans la zone aveugle du gyromètre. On notera à ce propos que le signal résultant du filtrage passe haut 12 est représentatif non seulement de la fréquence des franges, mais également de la puissance des faisceaux laser. Afin d'éviter des erreurs lors de la comparaison avec le seuil prédéterminé 17, celui-ci est de préférence modulé dans un organe de compensation 18 en fonction de l'amplitude crête à crête 19 mesurée sur l'un des signaux de franges.

Par ailleurs, l'intensité lasée de l'un des faisceaux laser 4, 5 est prélevée, par exemple au moyen d'une photodiode, associée à un prisme de prélèvement et à un filtre passe haut ayant une fréquence de coupure de 100 Hz pour extraire au signal d'intensité lasée la valeur alternative représentative du signal de clignement.

Lorsque le comparateur 16 détecte une entrée dans une zone aveugle, le comparateur 16 envoie une impulsion à une unité de traitement 28 pour effectuer les étapes de détermination de l'amplitude du signal de clignement.

Selon un aspect de l'invention, l'amplitude du signal de clignement est déterminée de façon numérique en échantillonnant le signal de clignement au moment de l'impulsion correspondant à la traversée de la zone aveugle et en regroupant les mesures effectuées lors de plusieurs traversées de la zone aveugles afin de déterminer l'amplitude du signal de clignement. A cet effet, la composante de clignement extraite de l'intensité lasée par le filtre passe haut comme mentionné ci-dessus est transmise à un convertisseur analogique numérique et les valeurs échantillonnées sont mémorisées.

Selon un mode de mise en oeuvre préféré du procédé selon l'invention, l'estimation de l'amplitude de clignement est effectuée à partir d'un écart type donné par la formule σ² = 1/n Σ (W²) où σ est l'écart type, n est le nombre de points mesurés lors des différentes traversées de zone aveugle et W est la valeur du clignement pour chaque point. n est choisi en fonction de la fréquence souhaitée pour l'activation du push-pull et pour faciliter les calculs n est de préférence une puissance de deux.

L'amplitude de clignement déterminée sert à élaborer une commande de réglage de clignement 29 et une commande de longueur de trajet 20 servant à positionner les miroirs 6 et 7 du gyromètre 1. A ce propos, on notera que dans le document antérieur précité, la commande de réglage de clignement est appliquée à l'un des actionneurs du miroir tandis que la commande de longueur de trajet est appliquée à l'autre actionneur de miroir. Selon un aspect de l'invention, un meilleur découplage de ces deux asservissements est obtenu en commandant l'un des actionneurs (l'actionneur 8 dans le mode de mise en oeuvre illustré) par une tension représentative de la somme de la commande de réglage de clignement et de la commande de longueur de trajet, et l'autre actionneur (l'actionneur 9 dans le mode de mise en oeuvre illustré) par une tension représentative de la différence entre la commande de longueur de trajet et la commande de réglage de clignotement, comme symbolisé par les additionneurs 21 et 22 sur la figure.

Afin de ne pas perturber le fonctionnement normal du gyromètre, le procédé selon l'invention est de préférence mis en oeuvre seulement lorsque la vitesse d'entrée du gyromètre est inférieure ou égale à 0,8 fois la vitesse du mouvement de tremblement.

Bien entendu, l'invention n'est pas limitée au mode de mise en oeuvre décrit et on peut y apporter des variantes de réalisation sans sortir du cadre de l'invention tel que défini par les revendications.

En particulier, bien que le procédé selon l'invention ait été décrit en prévoyant un traitement parallèle sur chacun des signaux de franges puis en effectuant une sommation des signaux obtenus, on peut déterminer l'instant de passage dans une zone aveugle en effectuant le traitement sur un seul des groupes de franges en particulier dans le cas où le bruit est faible par rapport à l'amplitude des franges.

De même dans le cas où la puissance des faisceaux laser est suffisamment constante, il est possible de déclencher la détermination de l'amplitude de clignement après une comparaison avec un seuil de déclenchement 17 non modulé.

D'une façon plus générale, on peut utiliser tout moyen de mesure des variations de la fréquence du signal de clignement pour déclencher l'instant de mesure de l'amplitude de clignement.

## Revendications

1. Procédé de commande en push-pull d'un gyromètre à laser (1) comportant au moins trois miroirs (3, 6, 7) pour réaliser un trajet optique en boucle fermée pour deux faisceaux laser (4, 5) se propageant selon des sens opposés, le gyromètre étant en outre soumis à un mouvement de tremblement (10), au moins deux miroirs (6, 7) étant associés à des actionneurs (8, 9) reliés à des organes de commande en push-pull pour commander une position des miroirs minimisant l'amplitude d'un signal de clignement compris dans un signal d'intensité lasée des faisceaux laser, **caractérisé en ce qu**'il comporte les étapes de détecter la fréquence du signal de clignement d'au moins un faisceau laser, et de déclencher une mesure de l'amplitude du signal de clignement lorsque la fréquence du signal de clignement est inférieure à un seuil prédéterminé (17) correspondant à un passage dans une zone aveugle du gyromètre.

2. Procédé selon la revendication 1, **caractérisé en ce que** le gyromètre comporte un interféromètre (11) générant à partir des faisceaux laser un signal d'interférences comprenant deux signaux de franges (A, B) sensiblement en quadrature et **en ce que** le procédé comporte les étapes de filtrer au moins un signal de franges selon un filtrage passe haut (12), de comparer l'amplitude du signal filtré avec le seuil prédéterminé correspondant au passage dans la zone aveugle, et de déclencher la mesure de l'amplitude du signal de clignement lorsque le signal filtré est inférieur au seuil prédéterminé.

3. Procédé selon la revendication 2, **caractérisé en ce que** le signal filtré (12) est redressé avant l'étape de comparaison avec le seuil prédéterminé.

4. Procédé selon la revendication 3, **caractérisé en ce qu'**il comporte les étapes de filtrer les deux signaux de franges, de redresser les signaux obtenus, et d'additionner les signaux redressés selon un signal de sommation (14) avant d'effectuer une comparaison (16) avec le seuil prédéterminé.

5. Procédé selon la revendication 4, **caractérisé en ce que** le signal de sommation (14) est lissé par un filtrage passe bas (15) avant la comparaison (16) avec le seuil prédéterminé.

6. Procédé selon la revendication 2, **caractérisé en ce que** le seuil prédéterminé (17) est modulé en fonction de l'amplitude (19) d'un des signaux de franges.

7. Procédé selon la revendication 2, **caractérisé en ce que** la mesure de l'amplitude du signal de clignement est réalisée par échantillonnage du signal de clignement extrait d'une intensité lasée d'un des faisceaux laser.

8. Procédé selon la revendication 7, **caractérisé en ce que** l'amplitude du signal de clignement est calculée après avoir effectué des mesures sur plusieurs traversées de zones aveugles.

9. Procédé selon la revendication 1, **caractérisé en ce qu**'il est mis en oeuvre pour une vitesse d'entrée du gyromètre inférieure ou égale à 0,8 fois une vitesse maximale du mouvement de tremblement.

10. Procédé selon la revendication 1, **caractérisé en ce que** la commande en push-pull est réalisée en appliquant à un actionneur de miroir (8) un signal représentatif d'une somme d'une commande de longueur de trajet et d'une commande de réglage de clignement, et en appliquant à un autre actionneur de miroir (9) un signal représentatif d'une différence entre la commande de longueur de trajet et la commande de réglage de clignement.

## Claims

1. A push-pull method of controlling a laser gyro (1) comprising at least three mirrors (3, 6, 7) for implementing a closed loop light path for two laser beams (4, 5) propagating in opposite directions, the gyro also being subjected to dither movement (10), at least two mirrors (6, 7) being associated with respective actuators (8, 9) connected to push-pull control members for controlling the positions of the mirrors so as to minimize the amplitude of a winking signal occurring in a lased intensity signal of the laser beams, the method being **characterized in that** it comprises the steps of detecting the frequency of the winking signal of at least one laser beam, and of triggering measurement of the amplitude of the winking signal when the frequency of the winking signal is less than a predetermined threshold (17) corresponding to passing into a dead band of the gyro.

2. A method according to claim 1, **characterized in that** the gyro includes an interferometer (11) receiving the laser beams and generating therefrom an interference signal comprising two fringe signals (A, B) that are substantially in quadrature, and **in that** the method includes the steps of filtering at least one fringe signal with high-pass filtering (12), comparing the amplitude of the filtered signal with the predetermined threshold corresponding to passing into the dead band, and triggering measurement of the amplitude of the winking signal when the filtered signal is less than the predetermined threshold.

3. A method according to claim 2, **characterized in that** the filtered signal (12) is rectified before the step of comparison with the predetermined threshold.

4. A method according to claim 3, **characterized in that** it includes the steps of filtering the two fringe signals, of rectifying the resulting signal, and of adding the rectified signal to produce a sum signal (14) prior to performing a comparison (16) with the predetermined threshold.

5. A method according to claim 4, **characterized in that** the sum signal (14) is smoothed by low-pass filtering (15) prior to being compared (16) with the predetermined threshold.

6. A method according to claim 2, **characterized in that** the predetermined threshold (17) is modulated as a function of the amplitude (19) of one of the fringe signals.

7. A method according to claim 2, **characterized in that** the amplitude of the winking signal is measured by sampling the winking signal extracted from a lased intensity of one of the laser beams.

8. A method according to claim 7, **characterized in that** the amplitude of the winking signal is calculated after taking measurements on a plurality of dead-band crossings.

9. A method according to claim 1, **characterized in that** it is implemented for an entry speed of the gyro that is less than or equal to 0.8 times a maximum speed for the dither movement.

10. A method according to claim 1, **characterized in that** the push-pull control is performed by applying to one mirror actuator (8) a signal representative of the sum of a path length control and a winking adjustment control, and by applying to another mirror actuator (9) a signal representative of a difference between the path length control and the winking adjustment control.

## Patentansprüche

1. Verfahren zum Gegentaktantrieb eines Laserkreisels (1) mit mindestens drei Spiegeln (3, 6, 7), um eine optische Weglänge in Form einer geschlossenen Schleife für zwei Laserstrahlen (4, 5) zu erzeugen, die sich in entgegengesetzten Richtungen ausbreiten, wobei der Kreisel ferner einer Zitterbewegung (10) ausgesetzt wird, wobei mindestens zwei Spiegel (6, 7) mit Aktuatoren (8, 9) verbunden sind, die mit Elementen zum Gegentaktantrieb verbunden sind, um eine Stellung der Spiegel zu steuern, die die Amplitude eines Flackersignals minimiert, das in einem Laserintensitätssignal der Laserstrahlen enthalten ist, **dadurch gekennzeichnet, dass** es die Schritte umfasst: Erfassen der Frequenz des Flackersignals mindestens eines Laserstrahls und Auslösen einer Messung der Amplitude des Flackersignals, wenn die Frequenz des Flackersignals unter einem vorgegebenen Schwellenwert (17) liegt, der einem Übergang in einen Blindbereich des Kreisels entspricht.

2. Verfahren nach Anspruch 1, **dadurch gekennzeichnet, dass** der Kreisel ein Interferometer (11) umfasst, das aus den Laserstrahlen ein Interferenzsignal erzeugt, das zwei Streifensignale (A, B) umfasst, die im Wesentlichen um 90° phasenverschoben sind, und dass das Verfahren die Schritte umfasst: Filtern mindestens eines Streifensignals entsprechend einer Hochpassfilterung (12), Vergleichen der Amplitude des gefilterten Signals mit dem vorgegebenen Schwellenwert, der dem Übergang in den Blindbereich entspricht, und Auslösen der Messung der Amplitude des Flackersignals, wenn das gefilterte Signal unter dem vorgegebenen Schwellenwert liegt.

3. Verfahren nach Anspruch 2, **dadurch gekennzeichnet, dass** das gefilterte Signal (12) vor dem Schritt des Vergleichens mit dem vorgegebenen Schwellenwert gleichgerichtet wird.

4. Verfahren nach Anspruch 3, **dadurch gekennzeichnet, dass** es die Schritte umfasst: Filtern der beiden Streifensignale, Gleichrichten der erhaltenen Signale und Addieren der gleichgerichteten Signale zu einem Summensignal (14) vor dem Durchführen eines Vergleichs (16) mit dem vorgegebenen Schwellenwert.

5. Verfahren nach Anspruch 4, **dadurch gekennzeichnet, dass** das Summensignal (14) vor dem Vergleich (16) mit dem vorgegebenen Schwellenwert durch eine Tiefpassfilterung (15) geglättet wird.

6. Verfahren nach Anspruch 2, **dadurch gekennzeichnet, dass** der vorgegebene Schwellenwert (17) in Abhängigkeit von der Amplitude (19) eines der Streifensignale moduliert wird.

7. Verfahren nach Anspruch 2, **dadurch gekennzeichnet, dass** die Messung der Amplitude des Flackersignals durch Abtastung des Flackersignals erfolgt, das aus einer Laserintensität eines der Laserstrahlen extrahiert wird.

8. Verfahren nach Anspruch 7, **dadurch gekennzeichnet, dass** die Amplitude des Flackersignals berechnet wird, nachdem Messungen an mehreren Durchquerungen von Blindbereichen durchgeführt wurden.

9. Verfahren nach Anspruch 1, **dadurch gekennzeichnet, dass** es für eine Eintrittsgeschwindigkeit des Kreisels durchgeführt wird, die unter oder gleich der 0,8-fachen maximalen Geschwindigkeit der Zitterbewegung ist.

10. Verfahren nach Anspruch 1, **dadurch gekennzeichnet, dass** der Gegentaktantrieb durchgeführt wird, indem an einem Spiegelaktuator (8) ein Signal angelegt wird, das repräsentativ für eine Summe aus einem Weglängen-Steuersignal und einem Steuersignal zur Einstellung des Flackerns ist, und indem man an einem anderen Spiegelaktuator (9) ein Signal anlegt, das repräsentativ für eine Differenz zwischen der Steuerung der Länge der Weglänge und der Steuerung der Einstellung des Flackerns ist.
